# EUROPEAN PATENT APPLICATION

(11) **EP 4 336 294 A1**
(43) Date of publication of application: **13.03.2024**
(21) Application number: 23188045.1
(22) Date of filing: 27.07.2023
(51) Int. Cl.: G05B 23/02, H04L 9/40

(54) **SYSTEM AND METHOD FOR DETECTING ANOMALIES IN A CYBER-PHYSICAL SYSTEM**

(30) Priority: 09.09.2022 RU 2022123995; 13.07.2023 US 202318351811
(71) Applicant: AO Kaspersky Lab, Moscow 125212 (RU)
(72) Inventor: LAVRENTYEV, Andrey B., Moscow 125212 (RU); VORONTSOV, Artem M., Moscow 125212 (RU); NECHIPORUK, Artyom M., Moscow 125212 (RU); SHKULEV, Vyacheslav I., Moscow 125212 (RU); TRAVOV, Alexander V., Moscow 125212 (RU); IVANOV, Dmitry A., Moscow 125212 (RU); DEMIDOV, Nikolay N., Moscow 125212 (RU); MAMAEV, Maxim A., Moscow 125212 (RU)
(74) Representative: Chimini, Francesco

(57) **Abstract**

Disclosed herein are systems and methods for detecting anomalies in a cyber-physical system. In one example, an exemplary method comprises, for a list of parameters of the CPS, collecting data containing values of the parameters of the CPS, generating at least two subsets of parameters of the CPS from the collected data, selecting at least two anomaly detectors from a list of anomaly detectors and selecting at least one corresponding subset of the parameters of the CPS for each selected anomaly detector, pre-processing each subset of the parameters of the CPS and transmitting an output of the pre-processing to the corresponding anomaly detector, for each preprocessed subset, detecting anomalies in the data using the corresponding respective anomaly detector, and detecting a combined anomaly in the CPS by combining and processing results obtained from the selected at least two anomaly detectors.

## Description

### CROSS REFERENCE TO RELATED APPLICATIONS

The present application claims priority to Russian Patent Application No. 2022123995, filed on September 9, 2022, the entire content of which is incorporated herein by reference.

### FIELD OF TECHNOLOGY

The present disclosure relates to the field of industrial safety, and more specifically to systems and methods for detecting anomalies in a cyber-physical system.

### BACKGROUND

One of the urgent problems of industrial safety is the problem of safe operation of technological processes (TPs). The main threats to TPs include wear and tear and failure of equipment or assembly, unintentional errors or malicious actions in operational management, computer attacks on control systems and Information System (IS) and others.

To counter these threats, security systems of a cyber-physical systems (CPS) are traditionally used, which include Safety Instrumented Systems (SIS), anomaly detection systems based on an automated process control system (APCS) and specially built "external" monitoring systems for a particular equipment or assembly. The "external" systems are usually not integrated with the APCS. It should be noted that the above "external" systems, due to certain features of the CPS and TP, cannot always be deployed. However, even if such an installation is possible, the deployment of external systems is carried out only on critical units and assemblies of the enterprise due to the high cost and complexity in maintaining such external systems.

Unlike "external" systems, the SIS system, is built during the design of the enterprise. Then, the SIS system is integrated with the APCS system and serves to prevent the development of pre-known emergency processes. The obvious advantage of the SIS system is its simplicity, focus on the production processes of a particular enterprise, and taking into account all structural and technological solutions used at this enterprise. The disadvantages of the SIS system include the sufficient inertia of decision-making in the system and the presence of human factors in making such decisions. In addition, the SIS operates under the assumption of correct functioning of Control and Measuring Devices (CMD). In practice, ensuring a full implementation of a trouble-free operation of the CMD is not possible. For example, the CMD may periodically fail or may have the tendency to temporarily fail. In addition, duplication of all CMDs is extremely costly and not always technically possible or feasible.

However, anomaly detection systems based on APCS telemetry have the ability to simultaneously monitor all the TP of the enterprise, the interaction of various TP of the enterprise with each other. Due to the completeness of the data based on APCS telemetry, even in the presence of failures of the CMD, this approach allows the anomaly detection system to confidently detect anomalies that are deviations in the behavior of the monitored object - i.e., the CPS or IS. The wealth of data presented in the APCS allows monitoring with several models of the entire enterprise - both the physical (chemical or otherwise) processes of the enterprise, and the correct operation of all control systems for these processes, including the correctness of the actions of production operators.

In one example, the data associated with the monitoring includes:
- telemetry of physical and chemical processes, such as sensor readings, setting values, control layers;
- events in the CPS or IS (hereinafter referred to as events), such as individual commands, personnel actions, alarms, and other changes in the state of the monitored object.

Machine learning methods can be used to identify anomalies in telemetry data. The machine learning methods can be used to build highly efficient statistical models of the correct operation of the enterprise. For example, the efficient statistical model may be built with a large number of analyzed parameters. This allows users to find minor deviations in the operation of the equipment, even at an early stage of an anomaly development. The special architecture and interface of such systems allows these systems to work in parallel with the APCS system, without using its resources, to perform fault (i.e., anomaly) detection, display and isolation, as well as inform production operators about the detected anomalies and indicating certain technological parameters by which this anomaly was identified.

Using a variety of anomaly detection methods allows the detection to cover the entire range of deviations in the TP; however, the use of the same or intersecting data sets by several and anomaly detection models simultaneously leads to a need to combine information about the anomalies found (i.e., data fusion) by various methods and to provide CPS operators with a comprehensive summary information about the presence of an anomaly and characteristics of the anomaly.

An example of this approach is the in-line diagnostics of main oil pipelines using non-destructive testing methods. A combined in-line flaw detector, as a rule, consists of several separate diagnostic modules including ultrasonic thickness gauge (UTG), magnetic control module(s) (MCM), ultrasonic detector of parallel cracks and cracks of capacitor discharge (CD) welds and others. The run of the combined flaw detector through an industrial oil pipeline or product pipeline is carried out by sequentially connecting all its components into a single projectile with its subsequent movement in the flow of the pumping product. Thus, the entire diagnosed pipeline system will be uniformly covered with data from several types of control, which are further sent to the modules for automatic determination of the technological parameters of the pipeline and defects of its wall. Detection modules (detectors) of the above defects (i.e., anomalies) differ depending on the physical principles of control so that as a result, each of the modules produces its own set of defects and their characteristics. It is quite obvious that some of the types of defects will be observed and found by several of the modules in question. Therefore, it is quite natural to encounter the task of combining information from different modules into the concept of a single defect (combined anomaly). In addition, as a result of such a combination, it is possible to recalculate and clarify the essential characteristics of the defect, such as its type and dimensions, which would not be possible if only one type of control was present.

Therefore, there is a need for a more optimal way for detecting anomalies in a cyber-physical system, wherein the system operates with several anomaly detection modules such that a combined anomaly can be detected for the object, e.g., the CPS or IS, with subsequent unification (assembly) of information received from each of the modules into the combined anomaly.

### SUMMARY

Examples of the disclosure relate to detecting anomalies in a cyber-physical system, by operating several anomaly detection modules and subsequently combining the information received from each of the modules.

In one example, a method is provided for detecting anomalies in a cyber-physical system, the method comprising: for a list of parameters of the CPS, collecting data containing values of the parameters of the CPS; generating at least two subsets of parameters of the CPS from the collected data; selecting at least two anomaly detectors from a list of anomaly detectors and selecting at least one corresponding subset of the parameters of the CPS for each selected anomaly detector; pre-processing each subset of the parameters of the CPS and transmitting an output of the pre-processing to the corresponding anomaly detector; for each pre-processed subset, detecting anomalies in the data using the corresponding respective anomaly detector; and detecting a combined anomaly in the CPS by combining and processing results obtained from the selected at least two anomaly detectors.

In one example, the method further comprises post-processing the detected anomalies from each selected anomaly detector; and combining the post-processed detected anomalies.

In one example, the selecting of the at least two anomaly detectors and the at least one corresponding subset of the parameters of the CPS for each selected anomaly detector is performed based on at least one of: characteristics of the CPS; a list of parameters of the CPS and their values from a subset of parameters of the CPS; and types of the collected data and an amount of the collected data.

In one example, the selecting of the at least two anomaly detectors and the at least one corresponding subset of the parameters of the CPS for each selected anomaly detector is performed based on at least one of: a quality metric; Receiver Operating Characteristics (ROC) curve analysis results; execution time; and an amount of resources used by a computer performing the anomaly detection.

In one example, the pre-processing of a subset of the parameters of the CPS includes at least of one: data buffering with a time buffer of a pre-determined length; filtering of invalid data or data that arrived with a delay greater than a pre-determined length of time; reordering based on time points of obtaining the values of parameters of the CPS; filling in gaps in the values of parameters of the CPS; interpolation to a uniform grid; normalization of values of the parameter of the CPS; and repackaging the values parameters of the CPS for processing by the anomaly detector.

In one example, a detector of the at least two anomaly detectors detects anomalies by at least one of: detecting anomalies when a forecast error exceeds a pre-determined threshold value, wherein the forecast error is computed by predicting values of the parameters of the CPS and then determines a total forecast error for the values of the parameters of the CPS; detecting anomalies by applying a machine learning model based on the values of the parameters of the CPS; detecting anomalies when a rule for detecting anomalies is applied; and detecting anomalies by comparing the values of the parameters of the CPS with limit values of ranges of values established for the respective parameters.

In one example, a value of at least one of the parameters of the CPS comprises at least one of: a sensor measurement; a value of a controlled parameter of an actuator; a setpoint of an executive mechanism; a value of at least one input signal of a proportional-integral-differentiating (PID) regulator; and a value of an output signal of the PID controller.

In one example, values of the parameters of the CPS are collected from the CPS at a same time interval with an indication of the parameters of the CPS or from indication parts of the CPS in a form of a plurality of separate fluxes of values of the parameters of the CPS indicating the parameters contained in each stream.

In one example, result obtained from the selected at least two anomaly detectors are combined in at least one of the following ways: by combining anomaly localization regions from individual anomaly detectors such as common anomalies are localized, wherein said regions determine anomalies in space and/or time; by analyzing contributions of each detector to the combined anomaly; and by calculating predetermined characteristics of the combined anomaly using characteristics of the anomalies obtained from each of the detectors and information about respective contributions to the combined anomaly.

In one example, the combining of the anomaly localization regions is performed by: determining when a spatial or temporal region exceeds a predetermined percentage of the combined area; determining when centers of anomaly localization regions lie in a certain spatial or temporal region; and determining when a trained neural network identified the region as a region that belongs to a combined anomaly.

In one example, a contribution of a particular anomaly detector to the combined anomaly is determined by setting a feature vector corresponding to the total number of anomaly detectors, and by performing at least one of the following actions: equating the contribution of the particular anomaly to the combined anomaly to a number calculated from the contribution of the spatial or temporal region of the anomaly obtained by the particular detector to the combined anomaly; determining the contribution of the particular anomaly by a degree of proximity to the center of the combined anomaly; determining the contribution of the particular anomaly by applying a pretrained neural network that evaluates contributions; when a combined anomaly of the particular detector is not present in the formation, setting the contribution to zero; and when there is information about a degree of reliability or criticality of a particular detector for a technological process (TP) of the CPS in which the said detector detects an anomaly, changing the contribution of the detector based on the information about the degree of reliability or criticality.

In one example, after identifying at least one anomaly by each selected anomaly detector, the output data is further post-processed, wherein the post-processing includes: calculating an extended set of anomaly characteristics, including anomaly hazard assessment, determining types and sizes of the anomalies, normalizing and unifying the output information about anomalies, and detecting the combined anomaly by combining results obtained from the selected detectors.

In one example, when calculating the characteristics of the anomalies is not feasible or possible, setting a pre-determined value for the characteristics of the anomaly for which the calculation is not performed.

In one example, at least one of the following characteristics of the anomaly associated with the detector that detected the anomaly is calculated: a hazard class of the anomaly, the type and size of the anomaly; a probability of anomaly detection by the anomaly detector; values of deviations of the predicted values of the parameters of the CPS from true values or default values, the values of the specified deviations from settings, root mean square values of the measures of deviations of at least some of the parameters of the CPS used in the anomaly detector; maximum or average values of deviations of observed values of parameters of the CPS from certain predetermined limits, durations in time and frequency of specified deviations; and detector performance in detecting anomalies.

In one example, the anomaly detector is selected for a particular subset of the parameters of the CPS, such that: the selected anomaly detector provides a predetermined accuracy and completeness in anomaly detection for the particular subset, in accordance with a predetermined performance of the anomaly detector on the particular subset of parameters of the CPS, or in accordance with expert knowledge about the subset of parameters of the CPS.

In one example, subsets of parameters of the CPS are selected in accordance with at least one of the following characteristics of the subsets: significances of the parameters of the CPS for a technological process; the parameters of the CPS being associated with a particular type of equipment; the parameters of the CPS belonging to one technological process; and based on uniformity of physical parameters of the CPS in a subset.

In one example, a system is provided for detecting anomalies in a cyber-physical system, the system comprising a hardware processor configured to: for a list of parameters of the CPS, collect data containing values of the parameters of the CPS; generate at least two subsets of parameters of the CPS from the collected data; select at least two anomaly detectors from a list of anomaly detectors, select at least one corresponding subset of the parameters of the CPS for each selected anomaly detector; pre-process each subset of the parameters of the CPS and transmitting an output of the pre-processing to the corresponding anomaly detector; for each pre-processed subset, detect anomalies in the data using the corresponding respective anomaly detector; and detect a combined anomaly in the CPS by combining and processing results obtained from the selected at least two anomaly detectors.

In one example, the system further comprises: at least one post-processing unit designed to process the output of a corresponding anomaly detector before transmitting the output to the ensemble tool, each detector having a dedicated set of post-processing units.

In one example, the post-processing units perform at least one of the following steps: assessment of risks of anomalies, determining types and sizes of anomalies, and normalizing and unification of output information about anomalies.

The method and system of the present disclosure are designed to provide improvements in detecting anomalies in a cyber-physical system. The first technical effect is to enable scaling of the system for detecting anomalies in the CPS by using a variety of anomaly detectors in the CPS or IS and assembling the results of these detectors to detect anomalies in the CPS or IS. The second technical effect is improving the accuracy of the anomaly detection through the use of multiple anomaly detectors in the CPS or IS and the subsequent unification of the results of all these detectors.

### BRIEF DESCRIPTION OF THE DRAWINGS

The accompanying drawings, which are incorporated into and constitute a part of this specification, illustrate one or more example aspects of the present disclosure and, together with the detailed description, serve to explain their principles and implementations.
**Fig. 1a** illustrates an example of a technological system.
**Fig. 1b** illustrates a particular example of an implementation of a technological system.
**Fig. 1c** illustrates an example variant of an organization of Internet of Things (IoTs) on an exemplary wearable device.
**Fig. 1d** illustrates example set of sensors of devices.
**Fig. 2** illustrates an example of a CPS and a system for detecting anomalies in the CPS.
**Fig. 3** illustrates an example of an anomaly detector.
**Fig. 4** illustrates an example of a system for detecting anomalies in the CPS.
**Fig. 5** illustrates an example of a data processing pipeline.
**Fig. 6** illustrates an exemplary method for detecting anomalies, e.g., in a CPS or IS.
**Fig. 7** presents an example of a general purpose computer system on which examples of the present disclosure can be implemented.

### DETAILED DESCRIPTION

Exemplary embodiments of the invention are described herein in the context of a system and method for detecting anomalies in a cyber-physical system. Those of ordinary skill in the art will realize that the following description is illustrative only and is not intended to be in any way limiting. Other examples will readily suggest themselves to those skilled in the art having the benefit of the disclosure. Reference will now be made in detail to implementations of the examples illustrated in the accompanying drawings. The same reference indicators will be used to the extent possible throughout the drawings and the following description to refer to the same or like items.

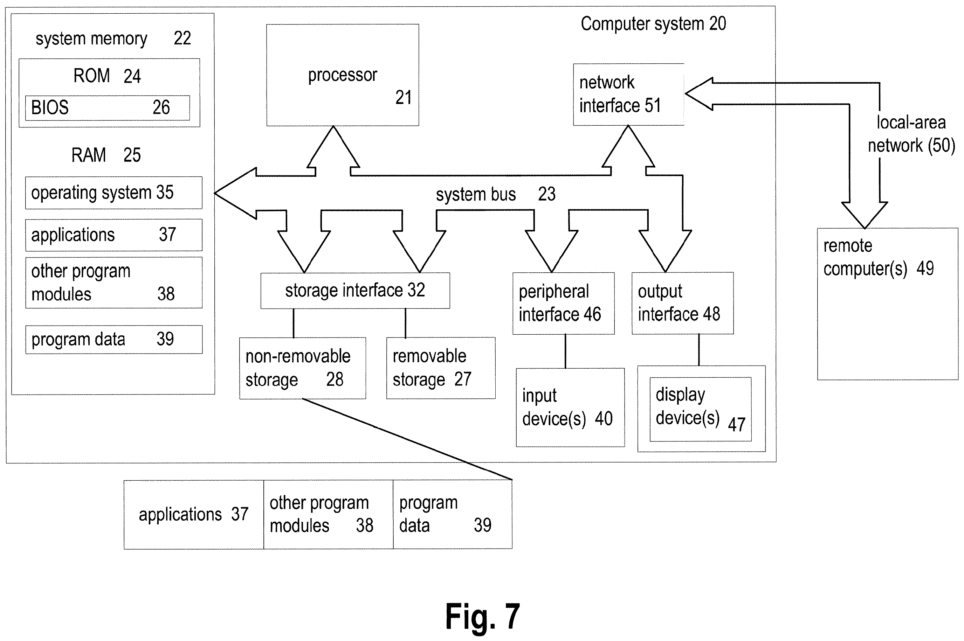

In one example, the present disclosure describes a system for detecting anomalies in a cyber-physical system that is implemented on a computing system, that includes real-world devices, systems, components, and groups of components realized with the use of hardware such as integrated microcircuits (application-specific integrated circuits, ASICs) or field-programmable gate arrays (FPGAs) or, for example, in the form of a combination of software and hardware such as a microprocessor system and set of program instructions, and also on neurosynaptic chips. The functionality of such means of the system may be realized solely by hardware, and also in the form of a combination, where some of the functionality of the system means is realized by software, and some by hardware. In certain examples, some or all of the components, systems, etc., may be executed on the processor of a general-purpose computer (such as the one shown in **Fig. 7**). Furthermore, the system components may be realized either within a single computing device or spread out among several interconnected computing devices.

In order to clearly and concisely describe the teachings of the present disclosure, a brief glossary of terms and technical concepts is first provided below.

The term "object of control" refers to a technological object to which external impact (controlling and/or disturbing) are directed in order to change the state of the object. In one example, the objects are devices (for example, an electric motor) and/or technological processes (or parts of technological processes).

The term "Technological Process (TP)" refers to the process of material production, which includes a sequential change in states of the material entity (i.e., the object of labor).

"Control loop" consists of material entities and control functions necessary for automated adjustment of the values of the measured technological parameters to values of desired settings. The control loop contains sensors, controllers and actuators.

"Process Variable (PV)" refers to the current measured value of a certain part of the TP that is observed or controlled. A technological parameter can be, for example, a measurement of a sensor.

"Setpoint" refers to a supported value of a technological parameter.

A "Manipulated Variable (MV)" refers to a parameter that is adjusted so that the value of the technological parameter is maintained at the layer of the setpoint.

The term "external impact" refers to a way of changing the state of the element to which the impact is directed (for example, an element of the technological system (TS) in a certain direction). The impact from the element of the TS to another element of the TS is transmitted in the form of a signal.

The "state of the object of control" refers to a set of the essential properties of the object of control, which is expressed by the parameters of the states. The state of the object of control is changed or retained under the influence of external impact, which may include control actions from a control subsystem.

A "state parameter" refers to one or more numeric values that characterize an essential property of an object; in a special case, the state parameter comprises a numeric value of a physical quantity.

The "formal state of the object of control" is the state of the object of control corresponding to the technological map and other technological documentation (if the object of control is the TP) or the traffic schedule (if the object of control is a device).

"Control action" refers to a purposeful (the purpose of the impact is to impact the the state of the object) a legitimate (provided for by the TP) external impact on the part of the subjects of the control subsystem control on the object of control, leading to a change in the state of the object of control or the retention of the state of the object of control.

A "control subject" is a device that directs the control effect to the object of control, or transfers the control effect to another control subject for transformation before directly directing the effect to the object.

The "state of the control subject" is a set of its essential properties, expressed by the parameters of the states, changed or held under the influence of external impact. A state parameter is one or more numeric values that characterize an essential property of a subject; in a special case, the state parameter may comprise a numeric value of a physical quantity.

"Essential properties" (respectively, and essential parameters of the state) of the control subject are properties that have a direct impact on the state of the object of control. At the same time, the essential properties of the object of control are the properties that have a direct impact on the controlled factors (e.g., accuracy, safety, efficiency) of the functioning of TS. For example, the compliance of cutting modes with formally specified modes, the movement of the train in accordance with the schedule, keeping the reactor temperature within acceptable limits, etc. Depending on the controlled factors, the parameters of the state of the controlled and, accordingly, the related parameters of the states of the control subjects are selected. The control subjects have a controlling effect on the object of control.

A "multi-layer management subsystem" is a set of management entities that includes several layers of control subjects.

An "information system (IS)" is a set of computing devices and means of communications therebetween.

A "cyber-physical system (CPS)" refers to an information technology concept that involves the integration of computing resources into physical processes. In such a system, sensors, equipment, and information systems are connected throughout the entire value chain that goes beyond a single enterprise or business. These systems communicate with each other using standard Internet protocols to predict, self-tune, and adapt to change. Examples of a cyber-physical system are a technological system, the Internet of Things (including wearable devices), and the Industrial Internet of Things.

The Internet of Things (IoT) refers to a computing network of physical objects ("things") equipped with built-in network technologies to interact with each other or with the external environment. The Internet of Things includes technologies such as wearable devices, electronic vehicle systems, smart cars, smart cities, industrial systems, etc.

The Industrial Internet of Things (IIoT) consists of Internet-connected equipment and advanced analytics platforms that process data from connected devices. IIoT devices may range from small weather sensors to complex industrial robots. Despite the fact that the word "industrial" evokes associations such as warehouses, shipyards, and production halls, IIoT technologies have great potential for use in a wide variety of industries, including agriculture, healthcare, financial services, retail and advertising. The Industrial Internet of Things is a subcategory of Internet of Things.

"Object" refers to the object of monitoring, in particular, an IS or CPS.

A "technological system (TS)" is a functionally interrelated set of control entities of a multi-layer control subsystem and a object of control (TP or device), which implements, through a change in the states of management subjects, a change in the state of the object of control. The structure of the technological system is formed by the main elements of the technological system (interrelated control subjects of the multi-layer management subsystem and the object of control, as well as the connections between these elements. In the case when the object of control in the technological system is a technological process, the ultimate goal of management is to change the state of the object of labor (raw materials, blanks, etc.) through a change in the state of the object of control In the case when the object of control in the technological system is a device, the ultimate purpose of control is to change the state of the device (vehicle, space object, etc.). The functional interconnection of the elements of the device implies the interconnection of the states of these elements. In this case, there may not be a direct physical connection between the elements, in particular, there is no physical connection between the actuators and the technological operation. For example, the cutting speed is functionally related to the spindle speed, despite the fact that these state parameters are not physically related.

A "computer attack" (also a cyberattack) is a targeted impact on information systems and information and telecommunication networks by software and hardware means, carried out in order to violate the security of information in these systems and networks.

An anomaly can occur, for example, due to a computer attack, due to incorrect or illegitimate human intervention in the operation of the device or TP, due to a failure or deviation of the technological process, including those associated with periods of changing its modes, due to the transfer of control loops to manual mode or due to incorrect sensor readings, and for other reasons known in the art. The anomaly may be characterized by a deviation of parameters of the CPS.

The area of localization of the anomaly may be the time range of observation of the anomaly (time domain) and/or the place of occurrence of the anomaly - that is, an indication of the element or part of the CPS where the anomaly occurred (spatial region), for example, an indication of the sensor or its coordinates in which the anomaly occurred. For each anomaly, the area of localization of the anomaly is determined - temporally and/or spatially. For example, in order to determine the spatial areas of localization (i.e., spatial regions), the CPS may be divided into different parts according to: belonging to different TP or parts thereof, belonging to different physical or logical areas of the CPS, and according to other criteria. In one example, the other criteria may include criteria specified by the operator of the CPS.

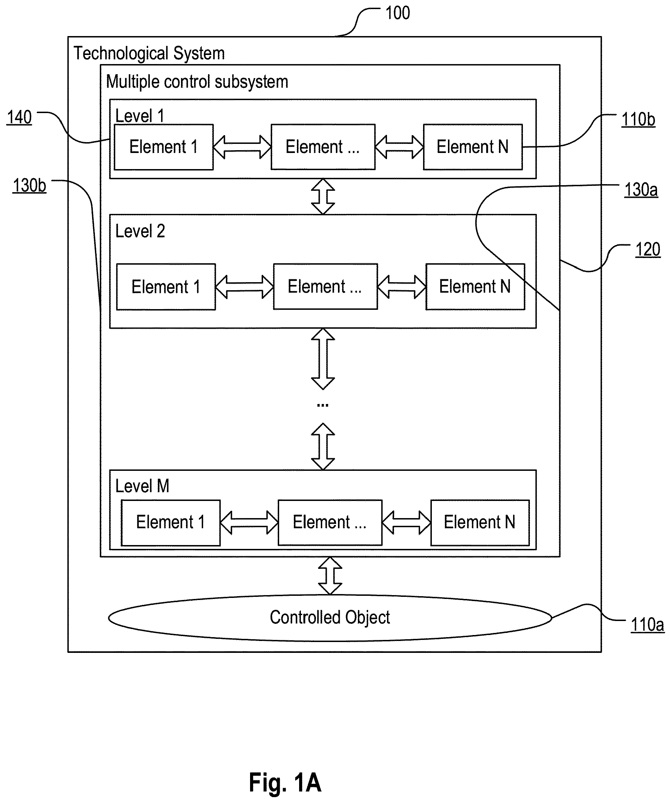

**Fig. 1a** illustrates an example of a technological system **100.** The technological system **100** includes elements **110a** and **110b**. The elements **110a** comprise objects of control **110a** and the elements **110b** comprise control subjects **110b**. The objects of control **110a**, control subjects **110b** form a multi-layer management subsystem **120** that includes layers 1, 2, ..., M. The control subjects **110b** are grouped into layers **140.** The various elements are interconnected via horizontal connections **130a** and vertical connections **130b**.

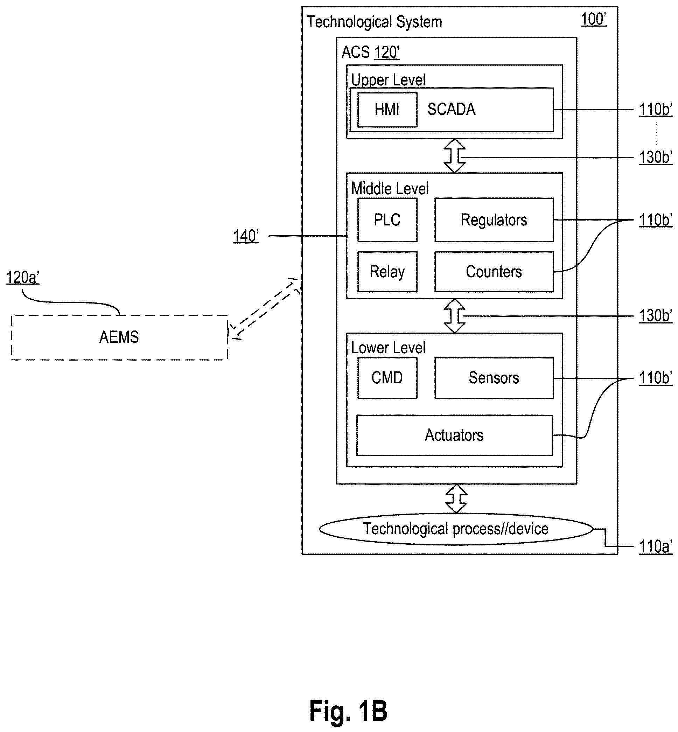

**Fig. 1b** illustrates a particular example **100'** of an implementation of a technological system **100.** Thus, the example **100'** shown in **Fig. 1b** is a particular implementation of the technological system shown in **Fig. 1a**. The object of control **110a'** is a TP or device, control actions are directed to the object of control **110a'** that are generated and implemented by the automated control system (ACS) **120'.** The ACS **120'** there are three layers **140',** consisting of control subjects **110b',** interconnected with each other both horizontally by horizontal connections and vertically by vertical connections **130b'** (connections between layers). It is noted that the horizontal connections within a given layer are not indicated on the figure but are regardless part of **Fig. 1b**. The relationships are functional, i.e., in general, a change in the state of the control subject **110b'** at one layer causes a change in the states of the associated control subjects **110b'** at this layer and other layers. Information about changes in the state of the control subject **110b'** is transmitted in the form of a signal along horizontal and vertical connections established between the control subjects **110b'.** That is information about changes in the state of the subject under consideration of control entities **110b'** is an external impact in relation to other control subjects **110b'.** In the ACS **120'**, layers **140'** are allocated in accordance with the purpose of the control subjects **110b'.** The number of layers may vary depending on the complexity of the ACS **120'.** Simple systems may contain one or more lower layers. For physical communication of the elements of the TS (**110a, 110b**) and subsystems of the TS **100** wired networks, wireless networks, integrated circuits are used. Ethernet, industrial networks, industrial networks are used for logical communication between the elements of the TS (**110a, 110b**) and the subsystems of the TS **100.** In addition, industrial networks and protocols of various types and standards are used, for example, Profibus, FIP, ControlNet, Interbus-S, DeviceNet, P-NET, WorldFIP, LongWork, Modbus, etc., may be used.

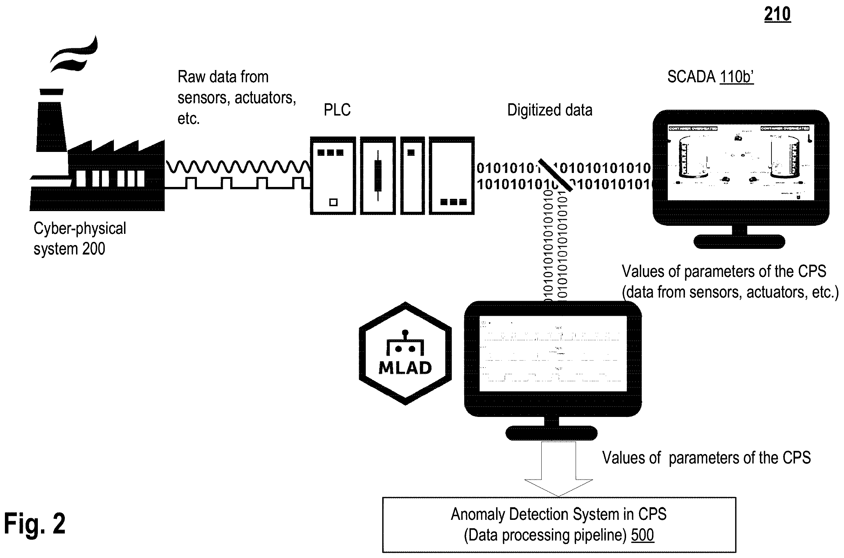

The upper layer of ACS **120'** is a layer for Supervisory Control and Data Acquisition (SCADA). Thus, the upper layer is the layer of dispatching-operator control, includes at least the following control entities **110b':** controllers, control computers, human-machine interfaces (HMI). On **FIG. 1b** and **FIG. 2** the controllers, control computers, and HMIs are depicted within one SCADA control entity. The upper layer is designed to monitor the states of the elements (**110a', 110b'),** to obtain and accumulate information about the state of the device elements (**110a', 110b'**) and, if necessary, to set up them.

The middle layer of ACS **120'** is a layer of controllers (control layer) that includes at least the following control subjects **110b'**: programmable logic controllers (PLC), counters, relays, regulators. Control subjects **110b'** of the "PLC" type receive information from control subjects **110b'** of "control and measuring equipment" type and control subjects **110b'** of "sensors" type. The received information is information associated with the state of the object of control **110a'.** Control subjects **110b'** of the "PLC" type develop (form) a control effect in accordance with the programmed control algorithm on the control subjects **110b'** of the "executive mechanisms" type. The executive mechanisms directly implement this control action (i.e., apply to the object of control) at the lower layer, for example via actuators and regulators. The actuator is a part of the executive device (equipment). The regulators, for example, proportional-integral-differential (PID) controllers are devices in the feedback control loop.

The lower layer of ACS **120'** (Input/Output layer) is the layer of control subjects **110b'** such as sensors and control and measuring devices (CMD) that control the state of the object of control **110a'**, as well as actuators. Actuators directly affect the state of the controlled object **110a'** to bring it into line with the formal state; i.e., the state corresponding to the technological task, technological map or other technological process documentation (in the case when the object is a TP) or a traffic schedule (in the case of the object being a device). At the lower layer, signals from control subjects **110b'** of the "sensors" type are coordinated with the inputs of the control subjects **110b'** of the middle layer, and the control subjects **110b'** of the "PLC" type are coordinated with the control subjects **110b'** such as the "actuators" that implement them. The actuator moves the portion being regulated (also referred to as a regulatory body) in accordance with signals coming from the regulator or control device. Actuators are the last link in the automatic control circuit and generally consist of the following elements (e.g., auxiliary devices):
- amplification devices (contactor, frequency converter, amplifier, etc.);
- actuator (electric, pneumatic, hydraulic drive) with feedback elements (output shaft position sensors, end position signaling, manual drive, etc.); and
- regulatory body (valves, valves, flaps, gate valves, etc.).

Depending on the conditions of application, the actuators may differ structurally from each other. The main elements of actuators usually include actuators and regulatory bodies. In one example, the element that performs the actuation to control entities is simply referred to as an actuator.

It is worth noting that to solve the problems of planning and management of the enterprise, Automatic Enterprise Management System (AEMS) **120a'** is used, which is part of the ACS **120'.** The AEMS is an application software package that may be used to automate software tasks across an IT infrastructure of an enterprise based on needs of the enterprise. For example, the tasks may be for managing customer interfaces, managing resources across the enterprise, managing supply chain for producing a product of the enterprise or for providing a service, and the like. Thus, the ACS **120'** of the present disclosure includes AEMS applications for automating software tasks of the enterprise.

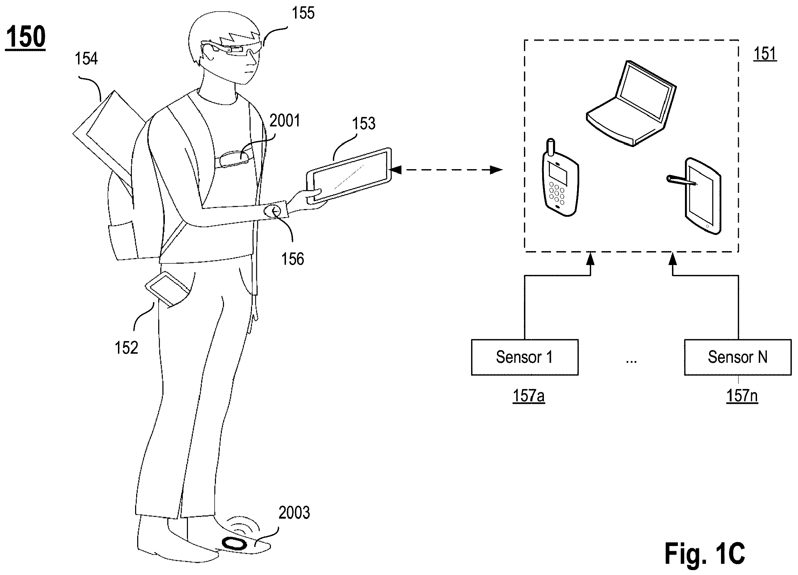

**Fig. 1c** illustrates an example variant **150** of an organization of Internet of Things (IoTs) on an exemplary wearable device. The technological system includes many different computer devices **151** of users. Among the devices **151** of the user may be, for example, a smartphone **152,** a tablet **153,** a laptop **154,** wearable devices, such as augmented reality glasses **155,** a "smart" watch **156.** The devices **151** of the user include many different sensors **157a-157n,** for example, a heart rate monitor **2001** and a pedometer **2003.**

It is worth noting that the sensors **157a-157n** may reside on a single device **151** of the user or on several devices. Moreover, some sensors **157a-157n** may reside on multiple devices **151** of the user simultaneously. A portion of the sensors **157a-157n** may reside on multiple devices **151** of the user. In addition, the sensors may be presented in several copies. For example, the Bluetooth module may reside on all devices **151**of the user, and the smartphone **152** may comprise two or more microphones necessary for noise reduction and for distance determination to a sound source.

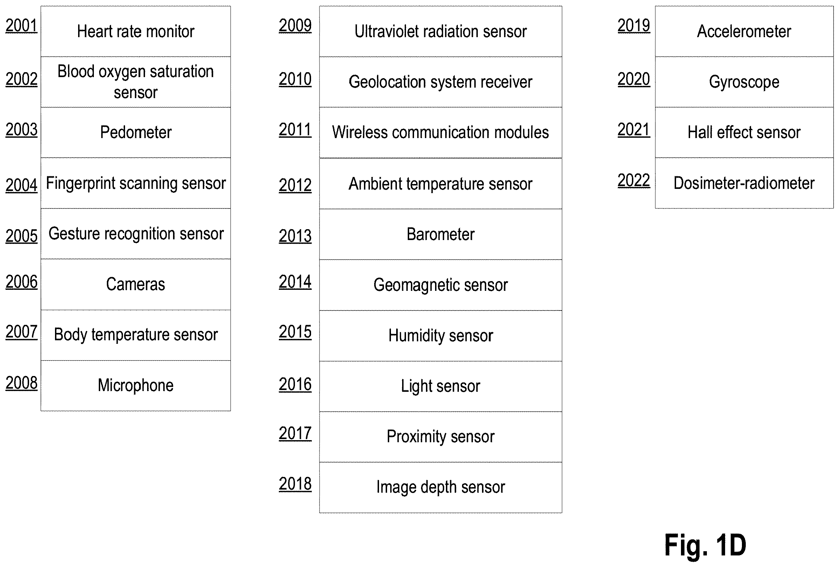

**Fig. 1d** illustrates example set of sensors of devices **151.** Among the sensors **157a-157n** may be, for example, the following:
- a heart rate monitor **2001** used to determine the user's pulse rate. In one example, the heart rate monitor **2001** may comprise electrodes and measure an electrocardiogram;
- blood oxygen saturation sensor **2002**;
- pedometer **2003**;
- fingerprint scanning sensor **2004**;
- gesture recognition sensor **2005**;
- cameras **2006,** for example, a camera directed at the user's eyes, used to determine the movement of the user's eyes and/or to authenticate the user's identity through the iris or retina of the eye, a camera directed at the environment surrounding the user's device, and the like;
- the user's body temperature sensor **2007** (e.g., a thermometer having direct contact with the user's body or non-contact thermometer);
- microphone **2008**;
- ultraviolet radiation sensor **2009**;
- geolocation system receiver **2010,** e.g., GPS receiver, GLONASS, BeiDou, Galileo, DORIS, IRNSS, QZSS, etc.;
- one or more wireless communication modules (e.g., GSM, LTE, NFC, Bluetooth, Wi-Fi, and others) **2011**;
- ambient temperature sensor **2012;**
- barometer **2013**;
- geomagnetic sensor **2014** (electronic compass);
- humidity sensor **2015**;
- light sensor **2016**;
- proximity sensor **2017**;
- image depth sensor **2018**;
- accelerometer **2019**;
- gyroscope **2020**;
- Hall effect sensor **2021** (magnetic field sensor); and
- dosimeter-radiometer **2022.**

**FIG. 2** illustrates an example **210** of a Cyber-Physical System (CPS) **200** and a system **500** for detecting anomalies in the CPS **200.** The CPS **200** has certain characteristics. The system **500** for detecting the anomalies may also be referred to as the data processing pipeline **500.** For ease of understanding, the CPS **200** is presented in a simplified form. Examples of CPS **200** are the previously described technological system (TS) **100** (see **FIGs. 1a-1b**), the Internet of Things (see **FIG. 1c-1d****)**, industrial Internet of things, IP. For clarity, further in the present disclosure, the TS will be described as being an exemplary implementation of CPS **200.** As mentioned above in conjunction with the descriptions of **FIGs. 1a-1b**, the CPS **200** comprises a plurality of control entities, such as sensors, actuators, PID controllers, etc. The data of said control entities is transmitted in raw form to the PLC. An analog signal may be used to transmit data. The PLC performs data processing and data conversion from analog to digital form - thereby converting the analog information into values of parameters of the CPS, including the technological parameters of the CPS (that is, into the telemetry data of the CPS **200**), and into events (for example, an activation of a particular sensor, triggering of sensor alarms, invocation of individual commands, and others). The values of the parameters of the CPS are then transmitted to the SCADA **110b'** system and the system for the detection of anomalies in the CPS **500**, as shown in **Fig. 2****.**

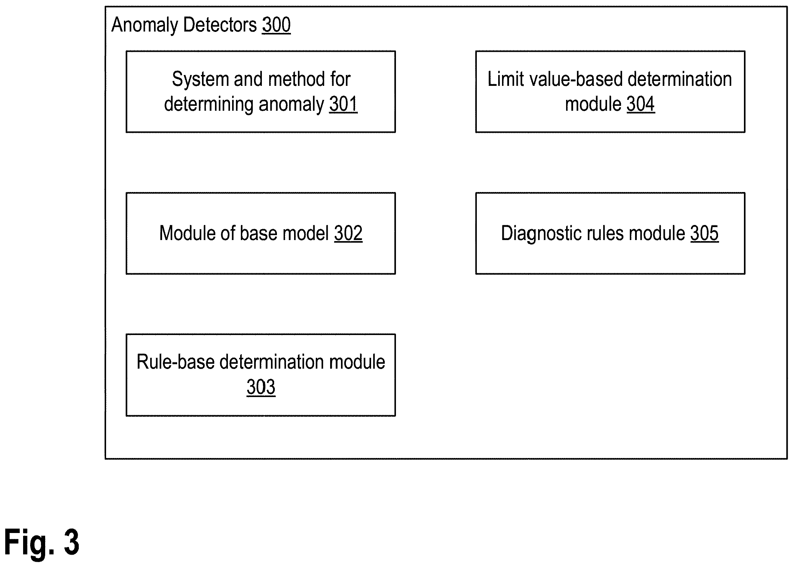

The anomaly detection system in the CPS **500** comprises anomaly detectors **300** (also anomaly detection modules, hereinafter referred to as detectors). **FIG. 3** illustrates an example of an anomaly detector **300.**

Anomaly detectors **300** are used to detect anomalies in the CPS **200**, as well as to determine related information about the detected anomalies. In one example, the anomaly information in the CPS **200** includes information about the anomaly, such as the area of localization of the anomaly, the values of the parameters of the CPS at each point in the time range of the anomaly observation, the contribution of each parameter of the CPS to the anomaly, information about the method of detecting said anomaly (i.e., about the detector **300**).

In another example, the anomaly information in CPS **200** further includes, for each parameter of a CPS, at least one of: a time series of values, the current value of the deviation of the predicted value from the actual value, a smoothed value of the deviation of the predicted value from the actual value.

In another example, information about anomalies in the CPS **200** additionally includes information one or more of: maximum values of the parameters of the CPS, minimum values of the parameters of the CPS, and average value of the parameters of the CPS taken during the anomaly period; and other statistical and deterministic characteristics, including sample variances and quantiles, the Fourier spectrum and the wavelet of transformations, convolutional operators from the parameters of the CPS.

In one example, the anomaly detectors **300** may be a system and method for determining an anomaly in CPS **301**, (previously described in US patents 11,175,976 and 11,494,252 and incorporated herein by reference), which determine the anomaly by predicting the values of a subset of parameters of the CPS. It is noted that in U.S. patent numbers 11,175,976 and 11,494,252, the term "CPS features" is used to correspond to the parameters of the CPS of the present disclosure. Then, the method of the present disclosure may be used for determining the total prediction error for a subset of parameters of the CPS, determining whether the determined total prediction error exceeds a threshold value, when the threshold value is exceeded, determining that an anomaly is detected in CPS **200.**

In addition, in one example, the method of the present disclosure further comprises determining the contribution of a subset of parameters of the CPS to the total forecast error as the contribution of the forecast error of the corresponding parameter of the CPS to the overall forecast error.

In one example, the anomaly detectors **300** may include a module of the base model **302** designed to apply a trained machine learning model to detect anomalies from values of a subset of parameters of the CPS (hereinafter referred to as the base model). In this case, the base model may be trained on data from a training sample which may or may not include known anomalies in the CPS **200.** The training sample may also include values of a subset of parameters of the CPS over a period of time-that is, a supervisor-driven machine learning model may be used. In addition, an unsupervised machine learning model may be used as a base model. To improve the quality of the base model, the trained base model may be tested and validated on test samples and validation samples, respectively. In this case, the test samples and validation samples may include known anomalies and values of a subset of parameters of the CPS for a certain period of time preceding the known anomaly in CPS **200**, but while differing from the training sample.

In yet another example, the anomaly detectors **300** may include a rule-based determination module **303** to be used for determining anomaly determination rules. Such rules may be pre-formed and obtained from the CPS operator via a feedback interface and may comprise conditions applied to values of a subset of parameters of the CPS at which the anomaly is determined.

In yet another example, the anomaly detectors **300** may include a limit value-based determination module **304** that determines an anomaly when the value of at least one parameter of the CPS from a subset of parameters of the CPS has exceeded a predetermined range of values for said parameter of the CPS, wherein said ranges of values may be calculated from the characteristic values or documentation for the CPS **200** or may be obtained from a CPS operator via a feedback interface.

In yet another example, the anomaly detectors **300** may include a diagnostic rules module **305** which may be used to form diagnostic rules by specifying a set of parameters of the CPS used in the diagnostic rule. The diagnostic rules module **305** may calculate the values of the CPS auxiliary parameter, use a given set of parameters of the CPS in accordance with the formed diagnostic rules. As a result, the diagnostic rules module **305** determines an anomaly in the CPS **200** based on the values of all parameters of the CPS.

In yet another example, the anomaly detectors **300** may include a graphical interface system for determining the anomaly manually by the CPS operator. This approach for manually determining the anomaly is described in U.S. Patent No. 11,175,976. Once the anomaly is determined, the information about the anomaly may be transmitted via a feedback interface.

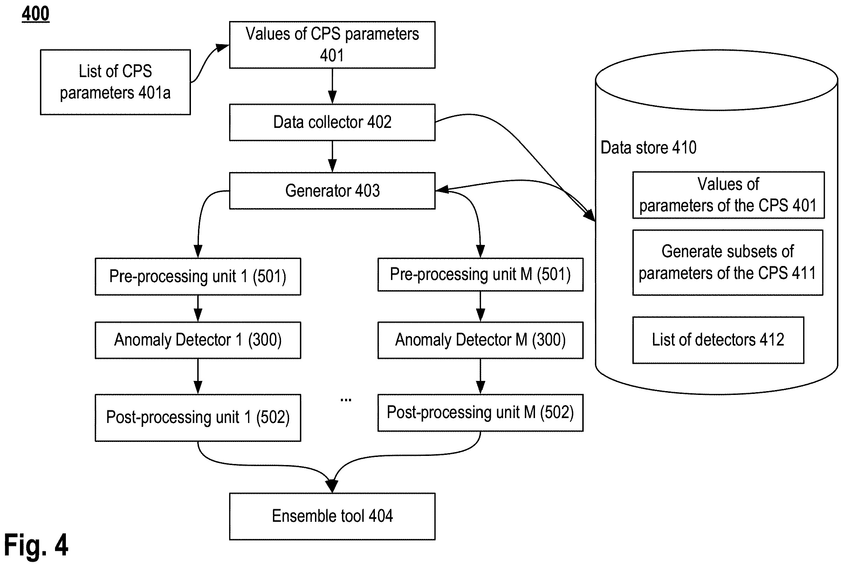

**Fig. 4** illustrates an example of a system **400** for detecting anomalies in the CPS **200.** For clarity, **Fig. 4** also shows the data processing pipeline **500.** In one example, the data of the CPS **200** may be collected either in real time, the data may be read from files (for example, the "csv" format) or databases, or the data may be obtained from third-party applications. The data may be represented as a list of parameters of the CPS **401a.** The list of parameters of the CPS 401a and measured values of said parameters of the CPS **401** (e.g., in a "timestamp - value of the parameter of the CPS" format) are stored in the data storage **410.** In one example, the timestamp may correspond to the actual measurement time, storage time, or sampling time of that parameter of the CPS. Therefore, the actual time of data acquisition by the data collector **402** may differ from the time indicated in the timestamp due to delays in data transmission, for example, due to a heavy data transfer load or other reasons. In addition, the timestamp may correspond to the time when the value of the parameter of the CPS was obtained. In another example, the timestamp is the time when the value of the parameter of the CPS was written to the data storage **410.**

In one example, the values of a parameter of the CPS **401** include at least one of the following values:
- sensor measurement;
- the value of the controlled parameter of the actuator;
- the setpoint of the executive mechanism;
- input values of the proportional-integral-differentiating regulator (PID-regulator); and
- the value of the output signal of the PID controller.

In one example, the data of the CPS **200** (i.e., the values of parameters of CPS **401**) are collected in one of the possible ways:
- simultaneously from the entire CPS **200** with the indication of the parameters of the CPS **401a**;
- as several separate data streams from separate parts of the CPS **200**, indicating the parameters of the CPS **401a** contained in each data stream.

After obtaining the values of the parameters of the CPS **401** by the data collector **402**, the system **400** may create a register of the parameters of the CPS represented in this data, after which this information may be received by the generator **403,** which is configured to:
**a)** generate subsets of parameters of the CPS **411** from among the parameters of the CPS **401a**, wherein these subsets **411** are stored in data storage **410**;
**b)** select a detector from the list of detectors **412** for each of the subsets of the parameters of the CPS **411,** wherein the list of detectors **412** includes part or all of the detectors **300** shown in **FIG. 3** and is contained in the data storage **410;** and
**c)** select pre-processing and post-processing units for the selected detectors **300.**

It is worth noting that all subsets of **411** together form the set of all parameters of the CPSs. It is also worth noting that these subsets **of 411** may coincide, intersect, or not intersect. In one example, some parameters of the CPS may not be included in any of the subsets of **411.** In this case, all subsets of **411** together, they form a set of all parameters of the CPS except for those parameters not included in any of the subsets **411.**

It is worth noting that the data storage **410** is intended both for storing data and for providing access to data including the obtained values of the parameters of the CPS **401**, the generated subsets of the parameters of the CPS **411** and the list of detectors **412.** Moreover, the number of detectors **412** may be set in advance.

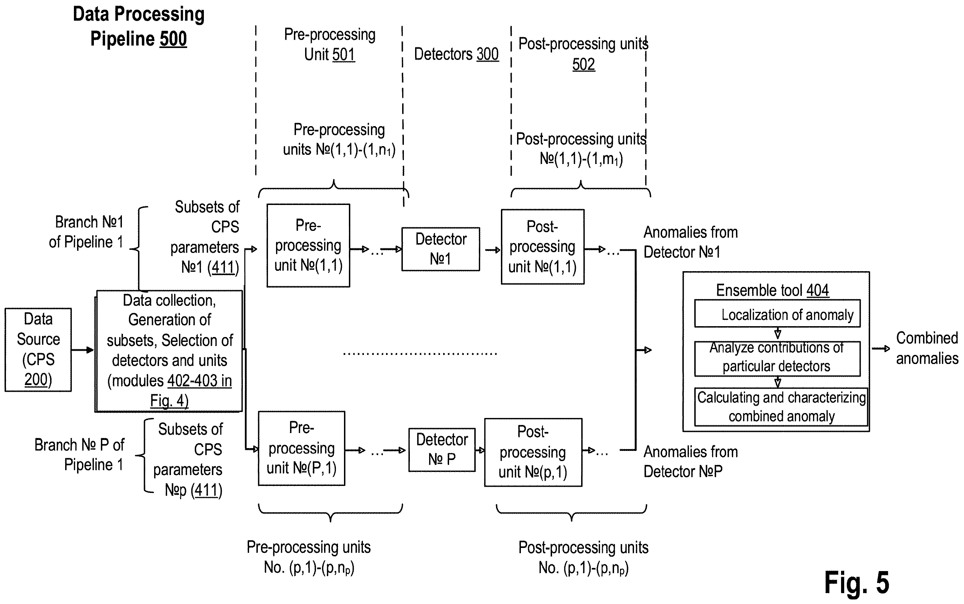

In one example, the pre-processing units **501** are configured to process each subset of the parameters of the CPS of **411** prior to transmitting to the respective anomaly detector **300** (e.g., a combination processing unit comprising pretreatment units **of** **FIG. 5**). Each anomaly detector **300** corresponds to its set of pre-processing units **501** from one or more blocks. Each of the post-processing units **502** is designed to process the output of a corresponding anomaly detector **300** before transmitting it to the ensemble tool **404** (shown in more detail in **FIG. 5**). Each anomaly detector **300** corresponds to its own set of post-processing units **502** from one or more blocks. CPS parameters **of 401a** are divided into subsets of the parameters of the CPS **411** according to a certain principle, for example, depending on the characteristics of subsets (according to belonging to a particular type of equipment), according to the physical meaning (by belonging to the same physical process, by the same type of physical parameters of the CPS, for example, temperature or pressure, by danger to TP, etc.).

In one example, a subset of the parameters of the CPS **411** is selected taking into account at least one of the following characteristics of the subset:
- the significance of the parameters of the CPS for TP;
- belonging of the parameters of the CPS to a particular type of equipment;
- belonging to one physical (chemical or other) TP; and
- the uniformity of the physical parameters of the CPS in a subset (temperature, pressure, and so on).

In order to add clarity, the selection of anomaly detector **300** for subsets of parameters of the CPS **411**, the selection of data pipeline blocks for the data processing pipeline **500**, and the results of the ensemble tool **404** are described below.

### Selection of Anomaly Detector 300

For each of the subsets of parameters of the CPS **411**, the selection of the anomaly detector **300** is made taking into account the characteristics of such an anomaly detector **300** and the characteristics of a subset of parameters of the CPS **411** used to determine anomalies by this anomaly detector **300.** Thus, for a given subset of the parameters of the CPS **411,** the anomaly detector **300** may be selected based on at least one of the following considerations: the accuracy and completeness of the determination of anomalies by this anomaly detector **300** for this subset of parameters of the CPS **411**, the performance of the anomaly detector **300** on this subset of parameters of the CPS **411**, expert knowledge of a subset of parameters of the CPS **411** (if the parameters of the CPS of the subset relate to a particular TP, type of equipment, etc.), and others.

In one example, the anomaly detector **300** and a corresponding subset of parameters of the CPS **411** are selected, taking into account, in particular, at least one of the following:
- characteristics of CPS **200**;
- a list of CPS **401a** parameters from a subset of CPS **411** parameters; and
- the type and amount of data.

In yet another example, the values of the parameter of the CPS are further taken into account when selecting the anomaly detector **300** and the corresponding subset of the parameters of the CPS **411.**

Thus, for CPS **200** operating with rapid time processes (about 1-10 ms), characteristic, for example, for electrical equipment, timely detection of the anomaly becomes critically important, which, in turn, imposes serious restrictions on the number of parameters processed by the anomaly detector from a subset of parameters of the CPS **411**, and the choice of the anomaly detector itself - here preference is given to threshold detectors or detectors based on simple diagnostic rules. On the contrary, for slow-flowing, inert processes characteristic of the petrochemical industry with their huge number of parameters (from 1000-10,000) and reaction times of the order of 1-10minutes, subsets **411** are chosen consisting of parameters of the CPS covering x certain CPS settings, such as atmospheric or vacuum columns, and containing hundreds of such parameters of the CPS. As an anomaly detector for such subsets **411**, as a rule, trained statistical or neural network models are taken, taking into account the complexity of the ongoing processes in such installations or CPS.

In another example, the anomaly detector **300** and a corresponding subset of parameters of the CPS **411** are selected, taking into account, in particular, at least one of the following characteristics associated with the anomaly detector **300**:
- quality metrics;
- the results of the Receiver Operating Characteristics (ROC) curve analysis;
- run time; and
- the amount of resources used by the computer.

In yet another example, the characteristics associated with the anomaly detector **300** include the performance of the anomaly detector **300**, e.g., the amount of memory, the processor time, the number of processor cores of the computer, the number of computers connected over the network and involved in the implementation of the method, and others).

### Selecting Data Processing Pipeline Blocks

**Fig. 5** illustrates an example of a data processing pipeline **500.** The processing pipeline **500** includes a set of preprocessing units **501**, anomaly detector **300**, and post-processing units **502.**

The blocks of pipeline **500**, in particular the pre-processing units **501** and post-processing units **502**, are functional modules implemented on a computer processor (see example **in** **Fig. 7**) with the ability to perform a given functionality. Each selected anomaly detector **300** has its own set of pre-processing units **501** and post-processing units **502.** Information about the pre-processing units **501** and post-processing units **502** may be contained, for example, in a list of detectors **412** or in a separate list in the data storage **410.** The pre-processing unit **501** is used to process data from a subset of the parameters of the CPS **411** selected for the anomaly detector **300** and received from the generator **403,** or to process data received from other preprocessing units **501.** The data of the last preprocessing unit **501** is transmitted to the detector unit **300.** The block of post-processing unit **502** is used to process the output of the corresponding anomaly detector **300** (i.e., information about detected anomalies). The last of the post-processing units transmits the processed data to the ensemble tool **404.**

For processing the input data stream, the following pre-processing units **501** can be used: alignment unit and time alignment unit, data filtering unit, uniform grid data interpolation unit, data normalization and repackaging unit and other units, whereas for post-processing units **502** typically bringing information about the anomalies found into some pre-approved unified form to facilitate their further ensemble.

The selection of the pre-processing units **501** and post-processing units **502** depends on the selection of the anomaly detector **300** and the desired output information about the anomalies found.

In one example, before transmitting the selected data to the anomaly detectors **300**, the data is further processed by the pre-processing unit **501**, including at least one of the following steps:
- data buffering with a time buffer of a pre-determined length, e.g., Δt;
- filtering (deleting) of invalid data or data that was received with a delay greater than a pre-determined length of time, e.g., Δt;
- reordering based on time points of obtaining the values of parameters **401** of the CPS;
- filling in gaps in the values of parameters **401** of the CPS;
- interpolation to a uniform grid;
- normalization of values of the parameter **401** of the CPS; and
- repackaging the values parameters of the CPS for processing by the anomaly detector **300.**

After testing, the anomaly detector **300**, regardless of its type, may include such information about the anomaly (also the characteristics of the anomaly) as the time interval for observing the anomaly, the contribution of each parameter of the CPS to the anomaly, information about the anomaly detector **300** that detected the anomaly, detected anomalies list, values of the CPS **401** parameters at each moment of the anomaly time interval, and others. In addition, an extended set of anomaly characteristics can be calculated, and such a calculation is made in post-processing units **502**. The postprocessing units **502** may include: blocks for assessing the danger of anomalies, in particular defects, blocks for determining types of such anomalies and sizing of such anomalies, blocks for normalizing and unifying the output information about anomalies, and other blocks. It should be noted that if it is impossible to calculate any characteristic of an anomaly in a particular anomaly detector **300**, the output information normalization unit forcibly sets this characteristic for some pre-selected value.

In one example, other characteristics of the anomaly associated with the anomaly detector **300** that identified the anomaly can be calculated, for example, the following:
- the hazard class of the anomaly detected by the anomaly detector **300**, its type, dimensions and other similar characteristics of the anomaly;
- the probability of determining the anomaly by the anomaly detector **300**;
- the values of deviations of the predicted values of the parameters of the CPS from their true values or default values, the values of deviations from the setpoints, the root mean square (RMS) deviations of both individual parameters of the CPS and the entire set of parameters of the CPS used in this anomaly detector **300**;
- maximum or average values of deviations of the observed values of the parameters of the CPS from certain predetermined limits, duration and frequency of such deviations; and
- the performance of this anomaly detector **300** in detecting an anomaly, for example, the amount of memory, CPU time, the number of processor cores of the computer, the number of computers connected over the network and participating in the implementation of the method, and others).

### Data Processing Using the Data Processing Pipeline 500

After the formation of subsets of the parameters of the CPS **411**, the list of detectors **412** and the pre-processing blocks **501** and post-processing **502**, the operation of the anomaly determination system is as follows. First, the data from the data collector **402** is divided into parallel streams (without duplication) in accordance with the separation of the parameters of CPS **401** into to subsets of the parameters of the CPS **411,** and then each subset **411** is directed to the respective one or more preprocessing units **501** to prepare the data for processing by the appropriate anomaly detector **300.** The prepared data is then processed by said anomaly detector **300,** which results in a stream of anomalies and other related information, such as the probability of an anomaly, hazard class of the anomaly, spatial and temporal dimensions, method of detection, and others information determined by the anomaly detector **300.** Then, the anomaly stream and the other related information are processed by the post-processing units **502** to bring this stream into a unified form that is the same for all anomaly detectors **300.** Thus, in fact, there is a set of parallel branches for processing subsets of data pipeline **500**, each individual branch processes its own subset of data and has its own tools for preparing this data, identifying anomalies and bringing them into a uniform form. Thus, each pipeline branch is a group (or set) of modules designed to process a single data stream, consisting of an anomaly detector **300**, a corresponding preprocessing unit **501**, and a corresponding post-processing unit **502.**

It is worth noting that the processing of the incoming set of parameters of the CPS by the various branches of the pipeline **500** is generally uneven in time, so anomaly data from some branches may come with a long delay relative to other branches. To exclude situations in which the ensemble tool **404** will operate in the absence of information from any branches of the pipeline **500**, buffering of the anomaly stream included in the ensemble **404** may be used. This buffering is similar to the buffering of these parameters of the CPS entering individual branches.

As shown in **FIG. 5**, the data is obtained from a data source, e.g., from the CPS **200**, and then by data collector **402** and generator **403** (see also **FIG. 4****,** elements **"402-403")** processes and forms subsets of the parameters of the CPS **411** and select the anomaly detectors **300** from the list of detectors **412** for each subset **411.** The processed data is further forked into p branches of the pipeline **500**, each branch transmitting a corresponding subset **411.** Thus, branch No. 1 of pipeline **500** receives subset No. 1, and processes the received subset with pre-processing blocks No. (1, 1) - (1, ni), then performs the anomaly detection via the anomaly detector No. 1, and post-processes with post-processing blocks No. (1, 1) - (1, m₁). Once, all the branches of the pipeline **500** are processed, the processed data from all branches ranging from branch No. 1 to branch number p of the pipeline **500** are transmitted to the ensemble tool **404.**

### Processing by Ensemble tool and Obtaining Ensemble results

The ensemble tool **404** serves to detect a combined anomaly (also a composite/resulting anomaly) in the CPS **200** by ensembled results (i.e., data fusion or data merging) received from selected anomaly detectors **300.** The ensemble tool **404** collects all identified anomalies from all branches of the data processing pipeline **500**, presented in some universal and predetermined form. This type can be dictated by the peculiarity of the TP and the anomalies detected in it, the peculiarities of the available means of determining anomalies, the characteristics of the data, etc. So, for the above example in-pipe diagnostics information about the anomaly from each of the means of non-destructive testing has the following form - the frame (local area) of the defect, the type of defect, its dimensions and the type of control.

After collecting the results obtained from all the selected anomaly detectors **300**, namely, all information about all anomalies detected by the anomaly detectors **300** over a certain time, the ensemble **404** conducts at least one of the following:
- combining anomaly localization regions from individual anomaly detectors **300** in order to localize common anomalies, wherein said areas identify (localize) anomalies in space (indicating an element or part of the CPS where the anomaly occurred) and/or time (the range of time of observation of the anomaly);
- analysis of the contribution of a particular anomaly detector **300** to the combined anomaly; and
- calculation of predetermined characteristics of the combined anomaly using the characteristics of the anomalies obtained from each of the anomaly detectors **300** and information about its contribution - that is, based on the localization region of the combined anomaly and the values of all parameters of the CPS.

The combination of areas or timestamps of anomalies is carried out on the basis of an analysis of spatial or temporal regions marked as an anomaly by one or another anomaly detector **300.** Thus, the anomaly regions obtained from different anomaly detectors **300** may be combined into one common region of the combined anomaly (also the region of localization of the combined anomaly and) when at least one of the following conditions is met:
- if the spatial or temporal intersection of the above areas exceeds a certain percentage of the combined area;
- if the centers of the respective areas lie in a certain spatial or temporal range; and
- if a specially trained neural network marks these regions as relating to a single combined anomaly, in particular a combined defect.

It is worth noting that at the stage of combining anomalies from various anomaly detectors **300,** anomalies of three types will be obtained, namely, anomalies obtained by combining regions from all anomaly detectors **300,** anomalies obtained by combining regions from only a part of the anomaly detectors **300**, and anomalies obtained by only one of the anomaly detectors **300.** All these anomalies after the combination step are also called combined anomalies, even if these are anomalies of the latter type.

It is worth noting that if the spatial and/or temporal regions of the anomalies detected by the anomaly detectors **300** differ significantly according to one of the above conditions, these anomalies will not be combined into one combined anomaly but will be considered separate anomalies. For example, anomalies may occur in different TPs or in different parts of the CPS **200.** For example, anomalies may occur in different TPs or in different parts of the CPS **200** - that is, the difference in the spatial regions of anomalies. In another example, anomalies may occur with a significant time difference, which also indicates that these are different anomalies of one part of the CPS **200.** In another example, anomalies can occur and be detected by anomaly detectors **300** in different places and with a large time difference, which also indicates different anomalies in both time and space.

After obtaining the localization region of the combined anomaly, the contribution of certain anomaly detectors **300** to this combined anomaly is analyzed. Thus, a feature vector corresponding to the total number of anomaly detectors **300** is introduced, and the contribution of a particular anomaly detector **300** is expressed by a number calculated either by the contribution of the spatial or temporal region of the anomaly obtained by this anomaly detector **300**, into a combined anomaly, either by the degree of proximity of the center of this and the combined anomaly, or by using a pretrained neural network that evaluates such a contribution. Note that in the absence of a combined anomaly of a particular anomaly detector **300** in the formation, its contribution is set as zero. Also note that if there is information about the degree of reliability or criticality of a particular anomaly detector **300** for a given TP in the CPS **200**, in which the said detector detects an anomaly, the contribution of this anomaly detector **300** is changed, for example, significantly increased or decreased.

After calculating the contribution of each of the anomaly detectors **300** to the combined anomaly, the predetermined characteristics of the combined anomaly are calculated based on the localization region of the combined anomaly and the values of all parameters of the CPS included in all subsets of the parameters of the CPS of the pipeline **500.** An example of such characterization is described in U.S. Patent Application No. 17/973,796, and can be carried out on the basis of only local data of the parameters of the CPS of the anomaly, taking into account the vector of contributions of the anomaly detectors **300** to this anomaly, taking into account the characteristics of the anomalies obtained from each of the anomaly detectors **300** or in any combination from the foregoing. It is worth noting that at the same stage, if necessary, anomalies are filtered either with predetermined characteristics, or determined by only one anomaly detector **300**, or determined by a pre-trained neural network, or according to a certain pre-selected set of rules.

So, at the output of the ensemble **404**, the TP operator receives a set of combined anomalies with their calculated characteristics, which may include the probability of the anomaly, its hazard class, spatial and temporal dimensions, detection method or method, and others.

The following is an example in which the use of a definition module based on limit values **304** can be applied to those parameters of the CPS that are critical to a particular TP in order to isolate critical anomalies (the first subset). In this case, the remaining parameters of the CPS (the second subset) will be analyzed in another way, such as system and method for determining anomaly **301.** In this case, the ensemble tool **404** has information about the method of detecting the anomaly and, when an anomaly is detected, the module **304** determines only the combined anomaly with some probability and hazard class (for example, 80% of the "second" hazard class). In contrast, when an anomaly is detected by both the anomaly detectors **300** simultaneously determine the combined anomaly with a higher probability and a greater hazard class (e.g., 90%-100%, probability of "first" hazard class), followed by isolating the critical anomalies based on a threshold information and sending to the operator of the CPS.

Another example is when the parameters of the CPS **401a** are divided into subsets of the parameters of the CPS **411** according to a certain principle. For each subset of the parameters of the CPS **411**, their respective anomaly detector **300** is selected. Then, each branch of the data processing pipeline **500** separately determines and evaluates the probability and layer of criticality of the anomalies found and sends this information to the ensemble tool **404.** It is worth noting that the layer of criticality of anomalies determined by the parameters of the CPS **401a** and each subset of the parameters of the CPS **411** can be set, for example, by: the operator of the CPS via a feedback interface, using a pre-trained machine learning model to assess the layer of criticality, or using statistical data on previously defined anomalies.

The ensemble tool **404** combines the results obtained from the selected anomaly detectors **300**, namely all the anomalies obtained, by assessing the proximity of the centers of the corresponding anomaly regions and then calculating the probability and hazard class of the anomaly, in particular by weight averaging for criticality and probability in all methods that determined the corresponding anomaly (i.e., detectors **300**). In the averaging, the vector corresponding to the detection (value 1) or non-detection (value 0) of a given anomaly by one means or another is used. In this case, if the total probability of the anomaly exceeds the specified threshold (for example, more than 0.5), then the anomaly is confirmed, otherwise it is not confirmed and is filtered out.

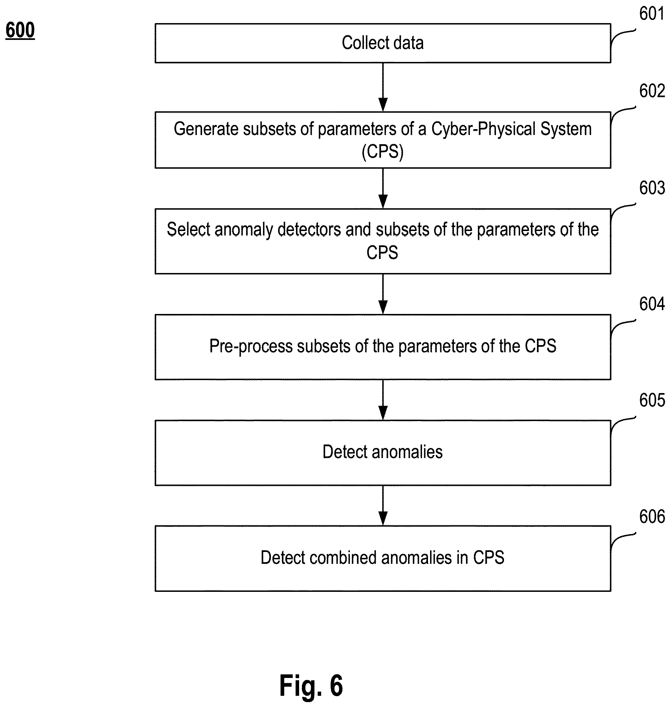

**Fig. 6** illustrates an exemplary method **600** for detecting anomalies, e.g., in a CPS or IS.

In step **601**, for a list of parameters of the CPS **401a**, method **600** collects data containing the values of the parameters of the CPS **401.**

In step **602**, method **600** generates at least two subsets of parameters of the CPS **411** from the collected data.

In step **603**, method **600** selects at least two anomaly detectors **300** from the list of detectors **412** and selects at least one corresponding subset of the parameters of the CPS **411** for each selected anomaly detector **300.**

In step **604**, method **600** pre-processes each subset of the parameters of the CPS **411** and transmits an output of the pre-processing to the corresponding anomaly detector **300.**

In step **605**, for each pre-processed subset of the parameters of the CPS **411**, method **600** detects anomalies in the data using the corresponding respective anomaly detector **300.**

In step **606**, using the ensemble tool **404**, method **600** detects a combined anomaly in the CPS by combining and processing results obtained from the selected at least two anomaly detectors **300.**

It is worth noting that steps **604** and **605** may take place in parallel for each subset of the parameters of CPS **411.** For example, one of the anomaly detectors **300** may pre-detect the anomaly in one millisecond and transmit the result to the ensemble tool **404**, while the second detector may require one second to pre-detect the anomaly. Particular examples presented earlier in **FIG. 2** **-** **FIG. 5**, are also applicable to the method of **FIG. 6****.**

In one example, the method **600** further comprises post-processing the detected anomalies from each selected anomaly detector; and combining the post-processed detected anomalies.

In one example, the selecting of the at least two anomaly detectors and the at least one corresponding subset of the parameters of the CPS for each selected anomaly detector is performed based on at least one of: characteristics of the CPS; a list of parameters of the CPS and their values from a subset of parameters of the CPS; and types of the collected data and an amount of the collected data.

In one example, the selecting of the at least two anomaly detectors and the at least one corresponding subset of the parameters of the CPS for each selected anomaly detector is performed based on at least one of: a quality metric; Receiver Operating Characteristics (ROC) curve analysis results; execution time; and an amount of resources used by a computer performing the anomaly detection.

In one example, the pre-processing of a subset of the parameters of the CPS includes at least of one: data buffering with a time buffer of a pre-determined length; filtering of invalid data or data that arrived with a delay greater than a pre-determined length of time; reordering based on time points of obtaining the values of parameters of the CPS; filling in gaps in the values of parameters of the CPS; interpolation to a uniform grid; normalization of values of the parameter of the CPS; and repackaging the values parameters of the CPS for processing by the anomaly detector.

In one example, a detector of the at least two anomaly detectors detects anomalies by at least one of: detecting anomalies when a forecast error exceeds a pre-determined threshold value, wherein the forecast error is computed by predicting values of the parameters of the CPS and then determines a total forecast error for the values of the parameters of the CPS; detecting anomalies by applying a machine learning model based on the values of the parameters of the CPS; detecting anomalies when a rule for detecting anomalies is applied; and detecting anomalies by comparing the values of the parameters of the CPS with limit values of ranges of values established for the respective parameters.

In one example, a value of at least one of the parameters of the CPS comprises at least one of: a sensor measurement; a value of a controlled parameter of an actuator; a setpoint of an executive mechanism; a value of at least one input signal of a proportional-integral-differentiating (PID) regulator; and a value of an output signal of the PID controller.

In one example, values of the parameters of the CPS are collected from the CPS at a same time interval with an indication of the parameters of the CPS or from indication parts of the CPS in a form of a plurality of separate fluxes of values of the parameters of the CPS indicating the parameters contained in each stream.

In one example, result obtained from the selected at least two anomaly detectors are combined in at least one of the following ways: by combining anomaly localization regions from individual anomaly detectors such as common anomalies are localized, wherein said regions determine anomalies in space and/or time; by analyzing contributions of each detector to the combined anomaly; and by calculating predetermined characteristics of the combined anomaly using characteristics of the anomalies obtained from each of the detectors and information about respective contributions to the combined anomaly.

In one example, the combining of the anomaly localization regions is performed by: determining when a spatial or temporal region exceeds a predetermined percentage of the combined area; determining when centers of anomaly localization regions lie in a certain spatial or temporal region; and determining when a trained neural network identified the region as a region that belongs to a combined anomaly.

In one example, a contribution of a particular anomaly detector to the combined anomaly is determined by setting a feature vector corresponding to the total number of anomaly detectors, and by performing at least one of the following actions: equating the contribution of the particular anomaly to the combined anomaly to a number calculated from the contribution of the spatial or temporal region of the anomaly obtained by the particular detector to the combined anomaly; determining the contribution of the particular anomaly by a degree of proximity to the center of the combined anomaly; determining the contribution of the particular anomaly by applying a pretrained neural network that evaluates contributions; when a combined anomaly of the particular detector is not present in the formation, setting the contribution to zero; and when there is information about a degree of reliability or criticality of a particular detector for a technological process (TP) of the CPS in which the said detector detects an anomaly, changing the contribution of the detector based on the information about the degree of reliability or criticality.

In one example, after identifying at least one anomaly by each selected anomaly detector, the output data is further post-processed, wherein the post-processing includes: calculating an extended set of anomaly characteristics, including anomaly hazard assessment, determining types and sizes of the anomalies, normalizing and unifying the output information about anomalies, and detecting the combined anomaly by combining results obtained from the selected detectors.

In one example, when calculating the characteristics of the anomalies is not feasible or possible, setting a pre-determined value for the characteristics of the anomaly for which the calculation is not performed.

In one example, at least one of the following characteristics of the anomaly associated with the detector that detected the anomaly is calculated: a hazard class of the anomaly, the type and size of the anomaly; a probability of anomaly detection by the anomaly detector; values of deviations of the predicted values of the parameters of the CPS from true values or default values, the values of the specified deviations from settings, root mean square values of the measures of deviations of at least some of the parameters of the CPS used in the anomaly detector; maximum or average values of deviations of observed values of parameters of the CPS from certain predetermined limits, durations in time and frequency of specified deviations; and detector performance in detecting anomalies.

In one example, the anomaly detector is selected for a particular subset of the parameters of the CPS, such that: the selected anomaly detector provides a predetermined accuracy and completeness in anomaly detection for the particular subset, in accordance with a predetermined performance of the anomaly detector on the particular subset of parameters of the CPS, or in accordance with expert knowledge about the subset of parameters of the CPS.

In one example, subsets of parameters of the CPS are selected in accordance with at least one of the following characteristics of the subsets: significances of the parameters of the CPS for a technological process; the parameters of the CPS being associated with a particular type of equipment; the parameters of the CPS belonging to one technological process; and based on uniformity of physical parameters of the CPS in a subset.

**Fig. 7** is a block diagram illustrating a computer system 20 on which examples of systems and methods for detecting anomalies in a cyber-physical system may be implemented. The computer system 20 can be in the form of multiple computing devices, or in the form of a single computing device, for example, a desktop computer, a notebook computer, a laptop computer, a mobile computing device, a smart phone, a tablet computer, a server, a mainframe, an embedded device, and other forms of computing devices.

As shown, the computer system 20 includes a central processing unit (CPU) 21, a system memory 22, and a system bus 23 connecting the various system components, including the memory associated with the central processing unit 21. The system bus 23 may comprise a bus memory or bus memory controller, a peripheral bus, and a local bus that is able to interact with any other bus architecture. Examples of the buses may include PCI, ISA, PCI-Express, HyperTransport^{™}, InfiniBand^{™}, Serial ATA, I²C, and other suitable interconnects. The central processing unit 21 (also referred to as a processor) can include a single or multiple sets of processors having single or multiple cores. The processor 21 may execute one or more computer-executable code implementing the techniques of the present disclosure. The system memory 22 may be any memory for storing data used herein and/or computer programs that are executable by the processor 21. The system memory 22 may include volatile memory such as a random access memory (RAM) 25 and non-volatile memory such as a read only memory (ROM) 24, flash memory, etc., or any combination thereof. The basic input/output system (BIOS) 26 may store the basic procedures for transfer of information between elements of the computer system 20, such as those at the time of loading the operating system with the use of the ROM 24.

The computer system 20 may include one or more storage devices such as one or more removable storage devices 27, one or more non-removable storage devices 28, or a combination thereof. The one or more removable storage devices 27 and non-removable storage devices 28 are connected to the system bus 23 via a storage interface 32. In an example, the storage devices and the corresponding computer-readable storage media are power-independent modules for the storage of computer instructions, data structures, program modules, and other data of the computer system 20. The system memory 22, removable storage devices 27, and non-removable storage devices 28 may use a variety of computer-readable storage media. Examples of computer-readable storage media include machine memory such as cache, SRAM, DRAM, zero capacitor RAM, twin transistor RAM, eDRAM, EDO RAM, DDR RAM, EEPROM, NRAM, RRAM, SONOS, PRAM; flash memory or other memory technology such as in solid state drives (SSDs) or flash drives; magnetic cassettes, magnetic tape, and magnetic disk storage such as in hard disk drives or floppy disks; optical storage such as in compact disks (CD-ROM) or digital versatile disks (DVDs); and any other medium which may be used to store the desired data and which can be accessed by the computer system 20.

The system memory 22, removable storage devices 27, and non-removable storage devices 28 of the computer system 20 may be used to store an operating system 35, additional program applications 37, other program modules 38, and program data 39. The computer system 20 may include a peripheral interface 46 for communicating data from input devices 40, such as a keyboard, mouse, stylus, game controller, voice input device, touch input device, or other peripheral devices, such as a printer or scanner via one or more I/O ports, such as a serial port, a parallel port, a universal serial bus (USB), or other peripheral interface. A display device 47 such as one or more monitors, projectors, or integrated display, may also be connected to the system bus 23 across an output interface 48, such as a video adapter. In addition to the display devices 47, the computer system 20 may be equipped with other peripheral output devices (not shown), such as loudspeakers and other audiovisual devices.

The computer system 20 may operate in a network environment, using a network connection to one or more remote computers 49. The remote computer (or computers) 49 may be local computer workstations or servers comprising most or all of the aforementioned elements in describing the nature of a computer system 20. Other devices may also be present in the computer network, such as, but not limited to, routers, network stations, peer devices or other network nodes. The computer system 20 may include one or more network interfaces 51 or network adapters for communicating with the remote computers 49 via one or more networks such as a local-area computer network (LAN) 50, a wide-area computer network (WAN), an intranet, and the Internet. Examples of the network interface 51 may include an Ethernet interface, a Frame Relay interface, SONET interface, and wireless interfaces.

Examples of the present disclosure may be a system, a method, and/or a computer program product. The computer program product may include a computer readable storage medium (or media) having computer readable program instructions thereon for causing a processor to carry out examples of the present disclosure.

The computer readable storage medium can be a tangible device that can retain and store program code in the form of instructions or data structures that can be accessed by a processor of a computing device, such as the computing system 20. The computer readable storage medium may be an electronic storage device, a magnetic storage device, an optical storage device, an electromagnetic storage device, a semiconductor storage device, or any suitable combination thereof. By way of example, such computer-readable storage medium can comprise a random access memory (RAM), a read-only memory (ROM), EEPROM, a portable compact disc read-only memory (CD-ROM), a digital versatile disk (DVD), flash memory, a hard disk, a portable computer diskette, a memory stick, a floppy disk, or even a mechanically encoded device such as punch-cards or raised structures in a groove having instructions recorded thereon. As used herein, a computer readable storage medium is not to be construed as being transitory signals per se, such as radio waves or other freely propagating electromagnetic waves, electromagnetic waves propagating through a waveguide or transmission media, or electrical signals transmitted through a wire.

Computer readable program instructions described herein can be downloaded to respective computing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network interface in each computing device receives computer readable program instructions from the network and forwards the computer readable program instructions for storage in a computer readable storage medium within the respective computing device.

Computer readable program instructions for carrying out operations of the present disclosure may be assembly instructions, instruction-set-architecture (ISA) instructions, machine instructions, machine dependent instructions, microcode, firmware instructions, state-setting data, or either source code or object code written in any combination of one or more programming languages, including an object oriented programming language, and conventional procedural programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a LAN or WAN, or the connection may be made to an external computer (for example, through the Internet). In some examples, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform examples of the present disclosure.

In various examples, the systems and methods described in the present disclosure can be addressed in terms of modules. The term "module" as used herein refers to a real-world device, component, or arrangement of components implemented using hardware, such as by an application specific integrated circuit (ASIC) or FPGA, for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a computer system (such as the one described in greater detail in **Fig. 7**, above). Accordingly, each module may be realized in a variety of suitable configurations, and should not be limited to any particular implementation exemplified herein.

In the interest of clarity, not all of the routine features of the examples are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of those skilled in the relevant art(s). Moreover, it is not intended for any term in the specification or claims to be ascribed an uncommon or special meaning unless explicitly set forth as such.

The various examples disclosed herein encompass present and future known equivalents to the known modules referred to herein by way of illustration. Moreover, while examples and applications have been shown and described, it would be apparent to those skilled in the art having the benefit of this disclosure that many more modifications than mentioned above are possible without departing from the inventive concepts disclosed herein.

## Claims

1. A method for detecting anomalies in a cyber-physical system (CPS), the method comprising:
for a list of parameters of the CPS, collecting data containing values of the parameters of the CPS;
generating at least two subsets of parameters of the CPS from the collected data;
selecting at least two anomaly detectors from a list of anomaly detectors and selecting at least one corresponding subset of the parameters of the CPS for each selected anomaly detector;
pre-processing each subset of the parameters of the CPS and transmitting an output of the pre-processing to the corresponding anomaly detector;
for each pre-processed subset, detecting anomalies in the data using the corresponding respective anomaly detector; and
detecting a combined anomaly in the CPS by combining and processing results obtained from the selected at least two anomaly detectors.

2. The method according to claim 1, further comprising:
post-processing the detected anomalies from each selected anomaly detector; and
combining the post-processed detected anomalies.

3. The method according to any of claims 1 to 2, wherein the selecting of the at least two anomaly detectors and the at least one corresponding subset of the parameters of the CPS for each selected anomaly detector is performed based on at least one of:
characteristics of the CPS;
a list of parameters of the CPS and their values from a subset of parameters of the CPS;
and
types of the collected data and an amount of the collected data.

4. The method according to any of claims 1 to 3, wherein the selecting of the at least two anomaly detectors and the at least one corresponding subset of the parameters of the CPS for each selected anomaly detector is performed based on at least one of:
a quality metric;
Receiver Operating Characteristics (ROC) curve analysis results;
execution time; and
an amount of resources used by a computer performing the anomaly detection.

5. The method according to any of claims 1 to 4, wherein the pre-processing of a subset of the parameters of the CPS includes at least of one:
data buffering with a time buffer of a pre-determined length;
filtering of invalid data or data that was received with a delay greater than a pre-determined period of time;
reordering based on time points of obtaining the values of parameters of the CPS;
filling in gaps in the values of parameters of the CPS;
interpolation to a uniform grid;
normalization of values of the parameter of the CPS; and
repackaging the values parameters of the CPS for processing by the anomaly detector.

6. The method according to any of claims 1 to 5, wherein a detector of the at least two anomaly detectors detects anomalies by at least one of:
detecting anomalies when a forecast error exceeds a pre-determined threshold value, wherein the forecast error is computed by predicting values of the parameters of the CPS and then determines a total forecast error for the values of the parameters of the CPS;
detecting anomalies by applying a machine learning model based on the values of the parameters of the CPS;
detecting anomalies when a rule for detecting anomalies is applied; and
detecting anomalies by comparing the values of the parameters of the CPS with limit values of ranges of values established for the respective parameters.

7. The method according to any of claims 1 to 6, wherein a value of at least one of the parameters of the CPS comprises at least one of:
a sensor measurement;
a value of a controlled parameter of an actuator;
a setpoint of an executive mechanism;
a value of at least one input signal of a proportional-integral-differentiating (PID) regulator; and
a value of an output signal of the PID controller.

8. The method according to any of claims 1 to 7, wherein values of the parameters of the CPS are collected from the CPS at a same time interval with an indication of the parameters of the CPS or from indication parts of the CPS in a form of a plurality of separate fluxes of values of the parameters of the CPS indicating the parameters contained in each stream.

9. The method according to any of claims 1 to 8, wherein result obtained from the selected at least two anomaly detectors are combined in at least one of the following ways:
by combining anomaly localization regions from individual anomaly detectors such as common anomalies are localized, wherein said regions determine anomalies in space and/or time;
by analyzing contributions of each detector to the combined anomaly; and
by calculating predetermined characteristics of the combined anomaly using characteristics of the anomalies obtained from each of the detectors and information about respective contributions to the combined anomaly.

10. The method according to claim 9, wherein the combining of the anomaly localization regions is performed by:
determining when a spatial or temporal region exceeds a predetermined percentage of the combined area;
determining when centers of anomaly localization regions lie in a certain spatial or temporal region; and
determining when a trained neural network identified the region as a region that belongs to a combined anomaly.

11. The method according to any of claims 1 to 10, wherein a contribution of a particular anomaly detector to the combined anomaly is determined by setting a feature vector corresponding to the total number of anomaly detectors, and by performing at least one of the following actions:
equating the contribution of the particular anomaly to the combined anomaly to a number calculated from the contribution of the spatial or temporal region of the anomaly obtained by the particular detector to the combined anomaly;
determining the contribution of the particular anomaly by a degree of proximity to the center of the combined anomaly;
determining the contribution of the particular anomaly by applying a pretrained neural network that evaluates contributions;
when a combined anomaly of the particular detector is not present in the formation, setting the contribution to zero; and
when there is information about a degree of reliability or criticality of a particular detector for a technological process (TP) of the CPS in which the said detector detects an anomaly, changing the contribution of the detector based on the information about the degree of reliability or criticality.

12. The method according to any of claims 1 to 11, wherein after identifying at least one anomaly by each selected anomaly detector, the output data is further post-processed, wherein the post-processing includes:
calculating an extended set of anomaly characteristics, including anomaly hazard assessment, determining types and sizes of the anomalies, normalizing and unifying the output information about anomalies, and detecting the combined anomaly by combining results obtained from the selected detectors.

13. The method according to any of claims 1 to 12, when calculating the characteristics of the anomalies is not feasible or possible, setting a pre-determined value for the characteristics of the anomaly for which the calculation is not performed.

14. The method according to any of claims 1 to 13, wherein at least one of the following characteristics of the anomaly associated with the detector that detected the anomaly is calculated:
a hazard class of the anomaly, the type and size of the anomaly;
a probability of anomaly detection by the anomaly detector;
values of deviations of the predicted values of the parameters of the CPS from true values or default values, the values of the specified deviations from settings, root mean square values of the measures of deviations of at least some of the parameters of the CPS used in the anomaly detector;
maximum or average values of deviations of observed values of parameters of the CPS from certain predetermined limits, durations in time and frequency of specified deviations; and
detector performance in detecting anomalies.

15. The method according to any of claims 1 to 14, wherein, the anomaly detector is selected for a particular subset of the parameters of the CPS, such that:
the selected anomaly detector provides a predetermined accuracy and completeness in anomaly detection for the particular subset,
in accordance with a predetermined performance of the anomaly detector on the particular subset of parameters of the CPS, or
in accordance with expert knowledge about the subset of parameters of the CPS.

16. The method according to any of claims 1 to 16, wherein subsets of parameters of the CPS are selected in accordance with at least one of the following characteristics of the subsets:
significances of the parameters of the CPS for a technological process;
the parameters of the CPS being associated with a particular type of equipment;
the parameters of the CPS belonging to one technological process; and
based on uniformity of physical parameters of the CPS in a subset.

17. A system for detecting anomalies in a cyber-physical system (CPS), comprising:
at least one processor of a computing device configured to:
collect, by a data collector, data containing values of the parameters of the CPS;
generate, by a generator, at least two subsets of parameters of the CPS from the collected data;
select, by the generator, at least two anomaly detectors from a list of anomaly detectors and selecting at least one corresponding subset of the parameters of the CPS for each selected anomaly detector;
pre-process each subset of the parameters of the CPS by respective pre-processor and transmit an output of the pre-processor to the corresponding anomaly detector;
for each pre-processed subset, detect anomalies in the data using the corresponding respective anomaly detector; and
detect, by an ensemble tool, a combined anomaly in the CPS by combining and processing results obtained from the selected at least two anomaly detectors.
